# EUROPEAN PATENT APPLICATION

(11) **EP 4 553 119 A1**
(43) Date of publication of application: **14.05.2025**
(21) Application number: 23835541.6
(22) Date of filing: 04.07.2023
(51) Int. Cl.: C08L 101/00, B60C 1/00, C08L 9/06, C08L 15/00, C08L 23/26, C08L 45/00

(54) **POLYMER COMPOSITION, METHOD FOR PRODUCING SAME, RUBBER COMPOSITION, AND TIRE**

(30) Priority: 04.07.2022 JP 2022107986
(71) Applicant: BRIDGESTONE CORPORATION, Chuo-ku Tokyo 104-8340 (JP)
(72) Inventor: KOSAI Tomoyuki, Tokyo 104-8340 (JP); KUMAKI Kentaro, Tokyo 104-8340 (JP); YAGI Reiko, Tokyo 104-8340 (JP)
(74) Representative: Marks & Clerk LLP
(86) International application number: PCT/JP2023/024829
(87) International publication number: WO 2024/010010

(57) **Abstract**

Provided is a polymer composition with excellent cold flow resistance and low viscosity, a method for producing the same, a rubber composition containing the polymer composition, and a tire using the rubber composition. The polymer composition contains a high molecular weight polymer having a number-average molecular weight of 500,000 g/mol or more and one or more hydrogenated resins selected from the group consisting of hydrogenated aliphatic resin and hydrogenated cyclic aliphatic resin, in which a content of the hydrogenated resin is 20 parts by mass or more with respect to 100 parts by mass of the high molecular weight polymer.

## Description

### TECHNICAL FIELD

The present disclosure relates to a polymer composition, a method for producing the same, a rubber composition, and a tire.

### BACKGROUND

Polymers used in tire manufacturing can be relatively high molecular weight to meet various performance requirements. In this case, oil-added polymers with added processing oil are sometimes used to improve processability. In addition, polymers with added resin are sometimes used to improve both the gripping performance of the tire and its processability.

For example, JP2020-528487A (PTL 1) discloses a technique in which the adhesiveness of composition is reduced by using a polymer to which a specific resin is added.

### CITATION LIST

### Patent Literature

PTL 1: JP2020-528487A

### SUMMARY

### (Technical Problem)

However, polymers with added oil or resin, such as those exemplified in PTL 1, tend to cause significant cold flow phenomena, and improvements from this perspective have been sought.

It could thus be helpful to provide a polymer composition with excellent cold flow resistance and low viscosity, a method for producing the same, and a rubber composition containing the polymer composition and a tire using the rubber composition.

### (Solution to Problem)

A gist configuration of the present disclosure is as follows.

A polymer composition comprising a high molecular weight polymer having a number-average molecular weight of 500,000 g/mol or more and one or more hydrogenated resins selected from the group consisting of hydrogenated aliphatic resin and hydrogenated cyclic aliphatic resin, wherein a content of the hydrogenated resin is 20 parts by mass or more with respect to 100 parts by mass of the high molecular weight polymer.

The above configuration can provide the polymer composition with excellent cold flow resistance and low viscosity.

A method for producing a polymer composition, comprising mixing a high molecular weight polymer having a number-average molecular weight of 500,000 g/mol or more with one or more hydrogenated resins selected from the group consisting of hydrogenated aliphatic resin and hydrogenated cyclic aliphatic resin, wherein a compounding amount of the hydrogenated resin is 20 parts by mass or more with respect to 100 parts by mass of the high molecular weight polymer.

The above configuration can provide the polymer composition with excellent cold flow resistance and low viscosity.

### (Advantageous Effect)

The present disclosure can provide a polymer composition with excellent cold flow resistance and low viscosity, a method for producing the same, and a rubber composition containing the polymer composition and a tire using the rubber composition.

### DETAILED DESCRIPTION

### <Polymer composition>

The polymer composition of the present disclosure contains a high molecular weight polymer having a number-average molecular weight of 500,000 g/mol or more and one or more hydrogenated resins selected from the group consisting of hydrogenated aliphatic resin and hydrogenated cyclic aliphatic resin, in which a content of the hydrogenated resin is 20 parts by mass or more with respect to 100 parts by mass of the high molecular weight polymer.

Hereinafter, the "high molecular weight polymer having a number-average molecular weight of 500,000 g/mol or more" may be referred to as "high molecular weight polymer in the present disclosure"; and the "one or more hydrogenated resins selected from the group consisting of hydrogenated aliphatic resin and hydrogenated cyclic aliphatic resin" may be referred to as "hydrogenated resins in the present disclosure".

Traditionally, high molecular weight polymers with rigidity, such as oil-extended styrene-butadiene copolymer rubber (oil-extended SBR), which have a number-average molecular weight of 500,000 g/mol or more, are sometimes mixed with oil, etc. as a plasticizer in order to improve the processability of the polymers. However, when the high molecular weight polymers mixed with oil, etc., are processed into sheets or blocks and stacked for storage, the high molecular weight polymers are easily deformed and flow (cold flow phenomenon).

In contrast, the polymer composition of the present disclosure has excellent cold flow resistance and low viscosity. The reason for this is not known but is assumed to be due to the following reasons.

Since the hydrogenated aliphatic resin and hydrogenated cyclic aliphatic resin have low polarity, they are easily miscible with the high molecular weight polymer in the present disclosure, and it is considered that mixing the high molecular weight polymer with the hydrogenated resin can increase the glass transition temperature (Tg) of the polymer composition. As a result, it is believed that deformation of the polymer composition can be suppressed, and the cold flow phenomenon can be inhibited. It is also believed that since the hydrogenated resin in the present disclosure is easily miscible with the high molecular weight polymer in the present disclosure, the viscosity of the polymer composition can be lowered.

In this way, the phenomenon in which the high molecular weight polymer deforms and flows (cold flow phenomenon) during storage, transportation, etc., can be suppressed, while the increase in viscosity can be suppressed. This results in excellent processability of the polymer composition, as well as excellent processability when the polymer composition is mixed with a rubber component, etc. to knead and process the rubber composition.

The following is a detailed description of the components of the polymer composition.

### [[High molecular weight polymer]]

The high molecular weight polymer in the present disclosure has a number-average molecular weight of 500,000 g/mol or more.

Hereafter, the last three digits of the molecular weight ",000" are denoted by "k", and 500,000 may be described as "500k".

In the present disclosure, the number-average molecular weight (Mn) means the polystyrene-equivalent number-average molecular weight measured by gel permeation chromatography (GPC).

The number-average molecular weight of the high molecular weight polymer is preferably greater than 500,000 (500k) g/mol, more preferably greater than 700,000 (700k) g/mol, and even more preferably greater than 1,000,000 (1000k) g/mol. The number-average molecular weight of the high molecular weight polymer is preferably 3,000,000 (3000k) g/mol or less, more preferably 2,000,000 (2000k) g/mol or less, and even more preferably 1,500,000 (1500k) g/mol or less.

From the viewpoint of balancing the heat buildup properties with wet performance and wear resistance of the polymer composition, the glass transition temperature (Tg) of the high molecular weight polymer is preferably -30 °C or lower, more preferably -45 °C or lower, and even more preferably - 60 °C or lower. The glass transition temperature (Tg) of the high molecular weight polymer is preferably -80 °C or higher.

The Tg of high molecular weight polymer can be measured by differential scanning calorimeter (DSC).

The high molecular weight polymer is preferably modified. In other words, the high molecular weight polymer preferably has a modified functional group in the molecular chain.

By modifying the high molecular weight polymer, when the rubber composition containing the polymer composition of the present disclosure contains a filler, the filler dispersibility is improved, and a vulcanized rubber with low heat buildup and excellent fracture properties and wear resistance can be obtained.

The high molecular weight polymer can be modified with a modifier such as, for example, an alkoxysilane compound, an amine compound, or a tin compound. Only one modifier may be used, or two or more may be used. By using these modifiers, the high molecular weight polymer can have a modified functional group such as an alkoxysilane group; a primary, secondary, or tertiary amino group, or a tin atom-containing group, in the molecular chain. Furthermore, the primary and secondary amino groups may be protected by hydrolyzable protecting groups. The high molecular weight polymer may have only one or two or more modified functional groups. Among these, the high molecular weight polymer preferably has at least an alkoxysilane group in the molecular chain, and more preferably has an amino group in addition.

The type of high molecular weight polymer is not limited, and olefin-based polymers, ester-based polymers, amide-based polymers, urethane-based polymers, and diene-based polymers, etc. can be used, with diene-based polymers being preferred among them.

Examples of the diene-based polymers include polyisoprene rubber (IR), styrene-butadiene copolymer rubber (SBR), butadiene polymer (BR), ethylene propylene diene rubber (EPDM), chloroprene rubber (CR), halogenated butyl rubber, acrylonitrile-butadiene rubber (NBR). SBR, BR and IR may also be hydrogenated.

Only one or two or more high molecular weight polymers may be used.

Of the above, the high molecular weight polymer in the present disclosure preferably contains styrene-butadiene copolymer rubber (SBR) and more preferably consists of styrene-butadiene copolymer rubber (SBR).

When a diene-based polymer is used as the high molecular weight polymer, the vinyl bond content (Vi) in the diene compound portion of the diene-based polymer is preferably 10 mol% to 70 mol%, more preferably 15 mol% to 60 mol%, even more preferably 20 mol% to 50 mol% from the viewpoint of low loss property and WET performance of tires obtained from the rubber composition containing the polymer composition of the present disclosure.

The vinyl bond content of the diene-based polymer can be measured by ¹H-NMR spectrum.

When modified or unmodified SBR is used as the high molecular weight polymer, the bound styrene content (St) of the modified or unmodified SBR is preferably 3 mol% to 25 mol%, more preferably 4 mol% to 22 mol%, and even more preferably 5 mol% to 18 mol% from the viewpoint of low loss property and WET performance of tires obtained from the rubber composition containing the polymer composition of the present disclosure.

The bound styrene content of modified or unmodified SBR can be measured by ¹H-NMR spectrum.

### [[Hydrogenated resin]]

The polymer composition contains one or more hydrogenated resins selected from the group consisting of hydrogenated aliphatic resin and hydrogenated cyclic aliphatic resin, and the content of the hydrogenated resin in the polymer composition is 20 parts by mass or more with respect to 100 parts by mass of the high molecular weight polymer.

If the content of the hydrogenated resin in the polymer composition is less than 20 parts by mass with respect to 100 parts by mass of the high molecular weight polymer, the cold flow phenomenon of the polymer composition cannot be suppressed. From the viewpoint of more improving the cold flow resistance of the polymer composition, the content of the hydrogenated resin in the polymer composition is preferably 30 parts by mass or more, more preferably 35 parts by mass or more, and even more preferably 50 parts by mass or more with respect to 100 parts by mass of the high molecular weight polymer.

The content of the hydrogenated resin in the polymer composition is preferably 100 parts by mass or less, more preferably 80 parts by mass or less, and even more preferably 70 parts by mass or less with respect to 100 parts by mass of the high molecular weight polymer.

### (Hydrogenated aliphatic resin)

Examples of the hydrogenated aliphatic resin include hydrogenated acyclic aliphatic resin, such as C₅-based resin.

Only one type of hydrogenated aliphatic resin may be used, or two or more may be used.

Examples of the C₅-based resin include aliphatic resin obtained by (co)polymerizing a C₅ fraction obtained from the thermal cracking of naphtha in the petrochemical industry or from plant resources.

The C₅ fraction usually includes an olefinic hydrocarbon such as 1-pentene, 2-pentene, 2-methyl-1-butene, 2-methyl-2-butene, or 3-methyl-1-butene; a diolefinic hydrocarbon such as 2-methyl-1,3-butadiene, 1,2-pentadiene, 1,3-pentadiene, or 3-methyl-1,2-butadiene; or the like. A commercial item may be used as the C₅-based resin.

### (Hydrogenated cyclic aliphatic resin)

Examples of the hydrogenated cyclic aliphatic resin include C₅-C₉-based resin, C₉-based resin, dicyclopentadiene-based resin, terpene-based resin, terpene-aromatic compound-based resin, hydrogenated rosin-based resin, and other hydrogenated cyclic aliphatic resins.

One of these hydrogenated cyclic aliphatic resins may be used individually or two or more may be used in combination.

Examples of the C₅-C₉-based resin include a solid polymer obtained by polymerizing a C₅-C₁₁ fraction using a Friedel-Crafts catalyst such as AlCl₃ or BF₃. Specific examples of the C₅-C₉-based resin include copolymers having, as main components, styrene, vinyltoluene, α-methylstyrene, indene, and the like.

As the C₅-C₉-based resin, a resin with little C₉ or higher component is preferable from the viewpoint of compatibility with the rubber component. Here, including "little C₉ or higher component" means that the amount of C₉ or higher component in the total amount of resin is less than 50 mass%, and preferably 40 mass% or less. A commercial item may be used as the C₅-C₉-based resin.

The C₉-based resin refers to a solid polymer obtained by polymerizing a C₉ fraction using a Friedel-Crafts catalyst such as AlCl₃ or BF₃.

Examples of the C₉-based resin include a copolymer including indene, α-methylstyrene, vinyltoluene, and the like as main components.

The dicyclopentadiene-based resin (DCPD-based resin) refers to a resin obtained by polymerizing dicyclopentadiene using a Friedel-Crafts catalyst such as AlCl₃ or BF₃.

The terpene-based resin is a solid-state resin obtained by compounding turpentine oil, which is obtained simultaneously when obtaining rosin from pine trees, or a polymerizable component separated from the turpentine oil, and then polymerizing the turpentine oil or the polymerizable component using a Friedel-Crafts catalyst. Examples of the terpene-based resin include β-pinene resin and α-pinene resin. A typical example of the terpene-aromatic compound-based resin is terpene-phenol resin. The terpene-phenol resin may be obtained through various methods including causing terpenoids and various phenols to react with each other using a Friedel-Crafts catalyst, or further condensing the resultant with formalin. The terpenes of the raw material are not limited but are preferably monoterpene hydrocarbons such as α-pinene and limonene, more preferably terpenes containing α-pinene, and particularly preferably α-pinene. Styrene or the like may be included in the framework.

Furthermore, as the cyclic aliphatic resin, a resin obtained by copolymerizing a C₅ fraction with dicyclopentadiene (DCPD) (Cs-DCPD-based resin) may be used.

Here, when the dicyclopentadiene-derived component in the total resin content is 50 mass% or more, the C₅-DCPD-based resin shall be included in the dicyclopentadiene-based resin. When the dicyclopentadiene-derived component in the total resin content is less than 50 mass%, the C₅-DCPD-based resin shall be included in the C₅-based resin. The same applies to cases where a small amount of a third component is contained.

Among the above, the hydrogenated resin more preferably contains at least one selected from the group consisting of hydrogenated C₅-based resin, hydrogenated C₅-C₉-based resin, hydrogenated C₉-based resin, and hydrogenated dicyclopentadiene-based resin.

From the viewpoint of processability of the polymer composition, the softening point (Ts) of the hydrogenated resin is preferably between 100 °C and 150 °C, more preferably between 105 °C and 145 °C, and even more preferably between 110 °C and 140 °C.

From the viewpoint of improving the cold flow resistance of the polymer composition, the glass transition temperature (Tg) of the hydrogenated resin is preferably between 60 °C and 95 °C, more preferably between 63 °C and 92 °C, and even more preferably between 60 °C and 90 °C.

The ratio of the glass transition temperature (°C) to the softening point (°C) of the hydrogenated resin (glass transition temperature/softening point) (Tg/Ts) is preferably 0.5 or more. When the hydrogenated resin has Tg/Ts of 0.5 or more, the cold flow resistance of the polymer composition can be further improved. The Tg/Ts of the hydrogenated resin is more preferably 0.53 or more, and even more preferably 0.55 or more. Further, from the viewpoint of processability of the polymer composition, the Tg/Ts of the hydrogenated resin is preferably 0.75 or less, more preferably 0.72 or less, and even more preferably 0.68 or less.

The softening point of hydrogenated resin can be measured in accordance with JIS-K2207-1996 (ring-and-ball method), and the glass transition temperature of hydrogenated resin can be measured by differential scanning calorimeter (DSC).

The hydrogenated resin preferably has a number-average molecular weight (Mn) of 300 g/mol or more. When the number-average molecular weight of the hydrogenated resin is 300 g/mol or more, it is possible to suppress bleeding out of a low molecular weight resin from the polymer composition.

As described above, the number-average molecular weight (Mn) means the polystyrene-equivalent number-average molecular weight measured by gel permeation chromatography (GPC).

The number-average molecular weight of hydrogenated resin is more preferably 320 g/mol or more, and even more preferably 330 g/mol or more. The number-average molecular weight of hydrogenated resin is preferably 1000 g/mol or less, more preferably 900 g/mol or less, and even more preferably 860 g/mol or less.

From the viewpoint of compatibility with the high molecular weight polymer, the weight-average molecular weight (Mw) of hydrogenated resin is preferably 300 g/mol to 2500 g/mol, more preferably 350 g/mol to 2300 g/mol, and even more preferably 400 g/mol to 2100 g/mol.

The weight-average molecular weight (Mw) means the polystyrene-equivalent weight-average molecular weight measured by gel permeation chromatography (GPC).

From the viewpoint of compatibility with the high molecular weight polymer, the molecular weight distribution (MWD) of hydrogenated resin is preferably 1.30 to 2.50, more preferably 1.40 to 2.40, and even more preferably 1.50 to 2.30.

The molecular weight distribution (MWD) of hydrogenated resin can be calculated from the ratio of weight-average molecular weight (Mw) to number-average molecular weight (Mn) (Mw/Mn).

Although the polymer composition may further contain components other than the high molecular weight polymer in the present disclosure and the hydrogenated resin in the present disclosure, from the viewpoint of further improving the cold flow resistance of the polymer composition, the polymer composition preferably consists of the high molecular weight polymer in the present disclosure and the hydrogenated resin in the present disclosure.

As described above, when the polymer composition contains the high molecular weight polymer in the present disclosure and a given amount of the hydrogenated resin in the present disclosure, the glass transition temperature of the polymer composition can be increased, thereby suppressing the cold flow phenomenon.

The glass transition temperature of polymer composition can be measured by differential scanning calorimeter (DSC).

### <Method for producing polymer composition>

The method for producing a polymer composition includes mixing a high molecular weight polymer having a number-average molecular weight of 500,000 g/mol or more with one or more hydrogenated resins selected from the group consisting of hydrogenated aliphatic resin and hydrogenated cyclic aliphatic resin, wherein a compounding amount of the hydrogenated resin is 20 parts by mass or more with respect to 100 parts by mass of the high molecular weight polymer.

As the high molecular weight polymer having a number-average molecular weight of 500,000 g/mol or more, the polymers described as the high molecular weight polymer in the present disclosure can be used, and the preferred aspect is also the same. In addition, examples of the hydrogenated resin include the hydrogenated resins described as the hydrogenated resin in the present disclosure, and the preferred aspect is also the same.

From the viewpoint of further improving the cold flow resistance of the polymer composition produced, the compounding amount of hydrogenated resin in the present disclosure is preferably 30 parts by mass or more, more preferably 35 parts by mass or more, even more preferably 50 parts by mass or more to 100 parts by mass of the high molecular weight polymer; and preferably 100 parts by mass or less, more preferably 80 parts by mass or less, and even more preferably 70 parts by mass or less, with respect to 100 parts by mass of the high molecular weight polymer.

### <Rubber composition>

The rubber composition of the present disclosure comprises the polymer composition of the present disclosure.

The rubber composition of the present disclosure can contain diene-based rubber such as natural rubber, isoprene rubber and butadiene rubber as a rubber component. When the high molecular weight polymer in the present disclosure is a diene-based polymer, the polymer composition of the present disclosure can be used as the rubber component.

In addition to the polymer composition of the present disclosure, the rubber composition of the present disclosure can contain inorganic fillers such as carbon black and silica; softeners; age resistors; vulcanization accelerators such as sulfenamide vulcanization accelerators and thiuram vulcanization accelerators; stearic acid; zinc oxide; vulcanizing agents, etc.

### <Tire>

The tire of the present disclosure is formed using the rubber composition of the present disclosure.

In accordance with the type or members of the tire to be applied, the tire may be obtained by molding an unvulcanized rubber composition followed by vulcanization or may be obtained by firstly preparing semi-vulcanized rubber from an unvulcanized rubber composition through a preparatory vulcanization process or the like, performing molding using the semi-vulcanized rubber, and then additionally performing main vulcanization. As a gas with which the tire is filled, an inert gas such as nitrogen, argon, or helium can be used as well as normal air or air whose oxygen partial pressure has been adjusted.

The tire of the present disclosure can be used as a variety of tires, such as tires for passenger vehicles, small trucks, aircraft, and racing vehicles, but is particularly suitable for use as a tire for passenger vehicles.

The various components (resin, rubber, various additives, etc.) contained in the polymer composition, rubber composition, and tire described herein may be partially or completely derived from fossil resources, biological resources such as plant resources, or recycled resources such as end-of-life tires. They may also be derived from mixtures of two or more of fossil resources, biological resources and recycled resources.

### EXAMPLES

The presently disclosed techniques will be described in more detail below by way of examples, although these examples are intended for illustrative purposes only, and are not intended to limit the scope of the present disclosure in any way.

### <Examples 1-4 and Comparative Examples 1-5>

### (High molecular weight polymer)

1) Modified SBR: Modified styrene-butadiene copolymer rubber synthesized by synthetic method 1
2) Unmodified SBR: Unmodified styrene-butadiene copolymer rubber synthesized by synthetic method 2

### (Resin)

C5-based resin: Trade name "Quintone A100" manufactured by Zeon Corporation
C9-based resin: Trade name "Nisseki Neopolymer 140" manufactured by ENEOS Corporation
Hydrogenated DCPD-based resin: Trade name "T-REZ HA125" manufactured by ENEOS Corporation
Hydrogenated C9-based resin: Trade name "NS045 Alcon M-135" manufactured by Arakawa Chemical Industries, Ltd.

### (Synthesis method 1)

Cyclohexane (200 g), butadiene/cyclohexane solution (25 mass%, 216 g), and styrene (6 g) were added to a glass bottle in an inert atmosphere and mixed, followed by the addition of 2,2-di-(2-tetrahydrofuryl)propane/cyclohexane solution (0.2 M, 0.18 mL) and n-butyllithium solution (1.6 M, 0.19 mL). The mixture was shaken gently at 50 °C for 4 hours, after which 0.3 mol of N,N-bis(trimethylsilyl)-(3-amino-1-propyl)](methyl)(diethoxy)silane was added. It was then allowed to permeate for another 30 minutes at 50 °C. The reaction was then completely terminated by adding an appropriate amount of degassed isopropyl alcohol to the glass bottle, and to the resulting polymer cement was added 0.6 mL of an isopropyl alcohol solution of 2,6-di-t-butyl-p-cresol (5 mass%).

A portion of the polymer cement was taken out and the molecular properties of the polymer (modified SBR) were examined from the integral ratio of ¹H-NMR. The bound styrene content (St) of the polymer was 11 % and the vinyl bond amount (Vi) of the butadiene portion was 47 mol%.

The number-average molecular weight of the polymer (modified SBR) was measured using gel permeation chromatography and found to be 612,000 (612k) g/mol from the viewpoint of monodisperse polystyrene.

### (Synthesis method 2)

Cyclohexane (300 g), butadiene/cyclohexane solution (25 mass%, 108 g), and styrene (3 g) were added to a glass bottle in an inert atmosphere and mixed, followed by the addition of 2,2-di-(2-tetrahydrofuryl)propane/cyclohexane solution (0.2 M, 0.10 mL) and cyclohexane solution containing 1,3-bis(1-lithio-1,3-dimethylpentyl)benzene (0.15 M, 0.76 mL). The mixture was shaken gently at 50 °C for 10 hours, followed by the addition of an appropriate amount of degassed isopropyl alcohol to the glass bottle to thereby terminate the polymerization. To the resulting polymer cement was added 0.3 mL of an isopropyl alcohol solution of 2,6-di-t-butyl-p-cresol (5 mass%).

A portion of the polymer cement was taken out and the molecular properties of the polymer (unmodified SBR) were examined from the integral ratio of ¹H-NMR. The bound styrene content (St) of the polymer was 11 % and the vinyl bond amount (Vi) of the butadiene portion was 45 mol%.

The number-average molecular weight of the polymer (unmodified SBR) was measured using gel permeation chromatography and found to be 1,140,000 (1140k) g/mol from the viewpoint of monodisperse polystyrene.

### [[Preparation of polymer composition]]

The polymer cements obtained from synthesis methods 1 and 2 (containing 30 g of polymer) were mixed with THF solutions containing 15 g of various resins (30 g in Comparative Example 5) and shaken for 30 minutes. The resulting polymer cements were re-precipitated with isopropyl alcohol and dried under reduced pressure to obtain the polymer compositions.

In Tables 1 and 2, the compounding unit for each component is [part by mass].

For example, in Table 1, Comparative Example 1 means that it was prepared by mixing 100 parts by mass of modified SBR having bound styrene content (St) of 11 %, vinyl bond content (Vi) of the butadiene portion of 47 mol%, a number-average molecular weight (Mn) of 612,000 (612k) g/mol, and a glass transition temperature (Tg) of -54 °C; and 50 parts by mass of a C5-based resin having a number-average molecular weight (Mn) of 684 g/mol, a weight-average molecular weight (Mw) of 3939 g/mol, a molecular weight distribution (MWD) of 5.76, a glass transition temperature (Tg) of 48 °C, and a softening point (Ts) of 100 °C.

### [[Mn, Mw, MWD, Tg, Ts of resin]

The number-average molecular weight (Mn), weight-average molecular weight (Mw), molecular weight distribution (MWD), glass transition temperature (Tg), and softening point (Ts) of each resin listed in Table 1 were measured by the following methods.

### (Number-average molecular weight, weight-average molecular weight, molecular weight distribution)

A sample was prepared by dissolving about 2.5 mg of the resin component in 10 mL of tetrahydrofuran. Using the obtained sample, the average molecular weight of the hydrogenated resin was measured by gel permeation chromatography (GPC) under the following conditions to calculate the polystyrene equivalent number-average molecular weight (Mn) and weight-average molecular weight (Mw). MWD was calculated by Mw/Mn. • Column temperature: 40 °C
- Injection volume: 50 µL
- Carrier and flow rate: Tetrahydrofuran 0.6 mL/min

### (Glass transition temperature)

The glass transition temperature of the resin was measured by differential scanning calorimeter (DSC).

Specifically, in accordance with ISO 22768:2006, a differential scanning calorimeter "DSC2500" manufactured by TA Instruments Japan Inc. was used to record a DSC curve while heating from -100 °C at 10 °C/min under a helium flow of 50 mL/min, and the peak top (inflection point) of the DSC differential curve was taken as the glass transition temperature.

### (Softening point)

The softening point of the resin was measured in accordance with JIS-K2207-1996 (ring-and-ball method).

### [[Evaluation of polymer composition]]

### 1. Viscosity of polymer composition (G')

Using "RPA2000" manufactured by Alpha Technologies, each polymer composition was preheated at 60 °C (0.2 minutes after stabilization at 60 °C), and then dynamic measurements of the polymer composition were performed at 10 °C increments from 60 °C to 130 °C under conditions of a frequency of 1 Hz and 100 % strain. The measured viscosity (G') values were indexed with the viscosity of Comparative Example 1 being set at 100 in Table 1 and the viscosity of Comparative Example 3 at 100 in Table 2. A smaller index value indicates a lower viscosity of the polymer composition.

### 2. Cold flow resistance of polymer composition

In accordance with JIS K-6300-1:2001, the polymer composition was heated at a test temperature of 80 °C, with an L-shaped rotor having a preheating time of 1 minute and a rotor rotation time of 4 minutes to measure ML₁₊₄. The rotation of the L-shaped rotor was stopped immediately after the ML₁₊₄ measurement, and the time (in seconds) required for the ML₁₊₄ value to be reduced by 80 % was defined as T80. In Table 1, the measurement values were indexed with the value of Comparative Example 1 being set at 100. In Table 2, the measurement values were indexed with the value of Comparative Example 3 being set at 100. A larger index value indicates a better cold flow resistance of the polymer composition.

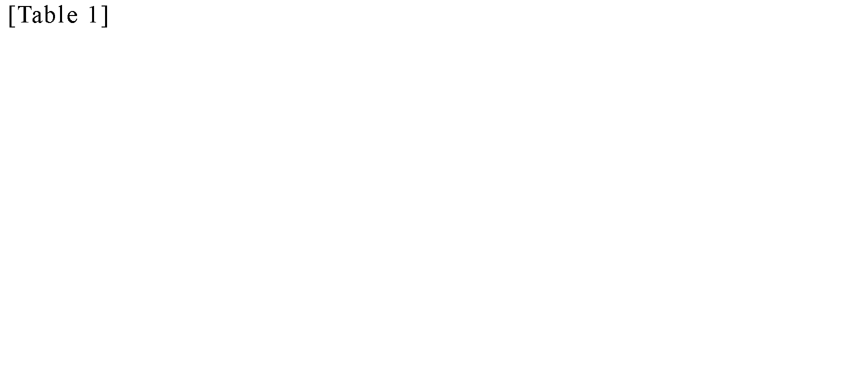

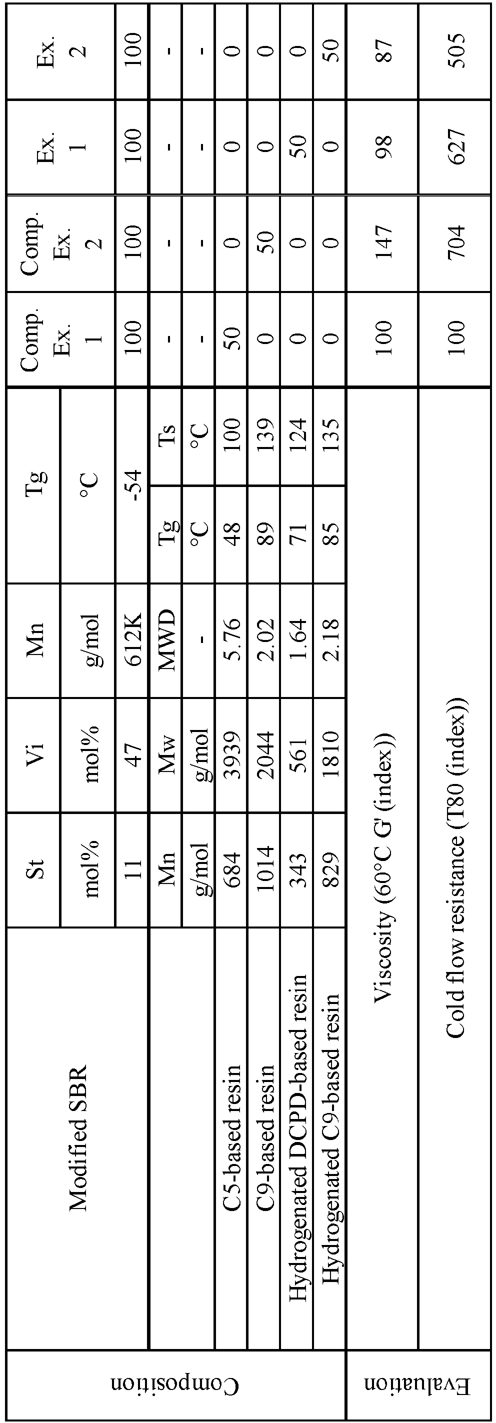

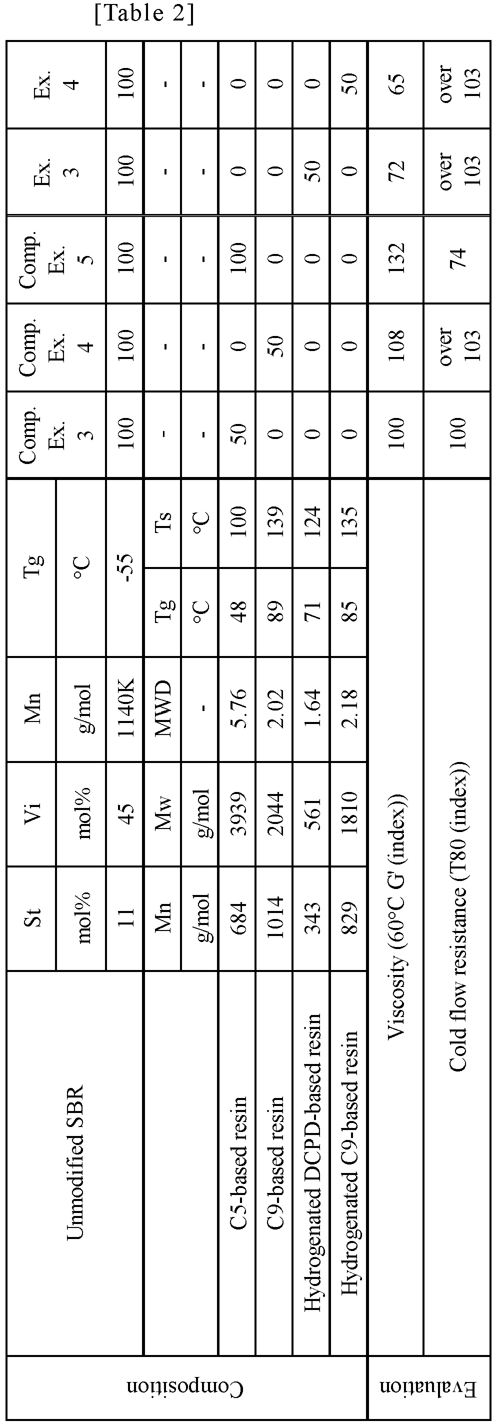

The results of the examples and comparative examples listed in Tables 1 and 2 indicate that the polymer composition according to the present disclosure can suppress the cold flow phenomenon and reduce viscosity.

On the other hand, among the polymer compositions of Comparative Examples 1 to 5 not containing hydrogenated resin, there were some compositions (Comparative Examples 2 and 4) in which the cold flow resistance was improved, but none of them were able to realize a reduction in viscosity, and therefore it was not possible to realize both a reduction in viscosity and an improvement in cold flow resistance.

### INDUSTRIAL APPLICABILITY

The polymer composition in the present disclosure can be suitably used as a component of a rubber composition, which can be suitably used for various vulcanized rubber articles such as hoses and belts as well as tires for passenger vehicles and trucks. Among the above, the rubber composition is suitable for manufacturing tires for passenger vehicles.

## Claims

1. A polymer composition comprising a high molecular weight polymer having a number-average molecular weight of 500,000 g/mol or more and one or more hydrogenated resins selected from the group consisting of hydrogenated aliphatic resin and hydrogenated cyclic aliphatic resin, wherein a content of the hydrogenated resin is 20 parts by mass or more with respect to 100 parts by mass of the high molecular weight polymer.

2. The polymer composition according to claim 1, wherein a glass transition temperature (Tg) of the high molecular weight polymer is -30 °C or lower.

3. The polymer composition according to claim 1 or 2, wherein the high molecular weight polymer is modified.

4. The polymer composition according to claim 1 or 2, wherein the hydrogenated resin contains at least one selected from the group consisting of hydrogenated C₅-based resin, hydrogenated C₅-C₉-based resin, hydrogenated C₉-based resin, and hydrogenated dicyclopentadiene-based resin.

5. The polymer composition according to claim 1 or 2, wherein a ratio of the glass transition temperature (°C) to a softening point (°C) of the hydrogenated resin (glass transition temperature/softening point) is 0.5 or more.

6. The polymer composition according to claim 1 or 2, wherein a number-average molecular weight of the hydrogenated resin is 300 g/mol or more.

7. The polymer composition according to claim 2, wherein the glass transition temperature of the high molecular weight polymer is -60 °C or lower.

8. A method for producing a polymer composition, comprising
mixing a high molecular weight polymer having a number-average molecular weight of 500,000 g/mol or more with one or more hydrogenated resins selected from the group consisting of hydrogenated aliphatic resin and hydrogenated cyclic aliphatic resin, wherein
a compounding amount of the hydrogenated resin is 20 parts by mass or more with respect to 100 parts by mass of the high molecular weight polymer.

9. A rubber composition comprising the polymer composition according to claim 1 or 2.

10. A tire using the rubber composition according to claim 9.
